# EUROPÄISCHE PATENTSCHRIFT

(11) **EP 0 368 200 B1**
(45) Veröffentlichungstag und Bekanntmachung des Hinweises auf die Patenterteilung: **03.03.1993**
(21) Anmeldenummer: 89120493.5
(22) Anmeldetag: 06.11.1989
(51) Int. Cl.: G02F 1/1337, B05D 1/32

(54) **Verfahren zum Beschichten einer Substratplatte für eine Flüssigkristallzelle**
Method for coating a substrate matrix for a liquid-crystal cell
Procédé pour couvrir un substrat pour une cellule à cristal liquide

(30) Priorität: 08.11.1988 DE 3837826
(43) Veröffentlichungstag der Anmeldung: 16.05.1990
(73) Patentinhaber: Nokia (Deutschland) GmbH, 75175 Pforzheim (DE)
(72) Erfinder: Brosig, Stefan, Dr., D-7000 Stuttgart (DE)

(56) Entgegenhaltungen:
- DE-A- 3 118 470
- DE-B- 2 613 925
- DE-B- 2 638 091

## Beschreibung

### TECHNISCHES GEBIET

Die Erfindung betrifft ein Verfahren zum Aufbringen einer bei Erwärmung aushärtenden Funktionsschichtsubstanz als berandete Schicht auf eine mit Leiterbahnen versehenen Substratplatte einer Flüssigkristallzelle.

### STAND DER TECHNIK

Eine mit Leiterbahnen versehene Substratplatte einer Flüssigkristallzelle erhält zusätzlich zur Leiterbahnschicht noch mindestens eine Orientierungsschicht als Funktionsschicht, häufig jedoch zusätzlich eine Isolierschicht und die genannte Orientierungsschicht als Funktionsschichten. Jede Funktionsschicht wird dadurch hergestellt, daß eine Flüssigkeitsschicht aufgetragen wird, getrocknet wird und ausgehärtet wird. Die Isolierschicht wird üblicherweise dadurch aufgebracht, daß eine hierfür vorgesehene Substanz, z. B. die Substanz Liquicoat-SiP der Firma Merck, beschichtet wird, getrocknet wird und durch Tempern bei etwa 370 °C in SiO₂ umgewandelt wird. Die isolierende SiO₂-Schicht bedeckt die Leiterbahnen bis zum Rand. was jedoch unerwünscht ist, da im Randbereich die Kontaktierung zu den Leiterbahnen erfolgen soll. Die SiO₂-Schicht ist daher im Randbereich zu entfernen, was durch Abätzen mit Flußsäure erfolgt.

Die Orientierungsschicht wird entsprechend aufgebracht. Als zu beschichtende Flüssigkeit wird häufig eine Polyimidlösung verwendet, wie sie z. B. mit Hilfe des Liquicoat-Imidkit der Firma Merck ansetzbar ist. Die aufgebrachte Lösung wird getrocknet. Nach dem Trocknen wird die Polyimidschicht überall außer im Randbereich belichtet. Sie wird dadurch für das lösungsmittel, in dem das Polyimid zunächst gelöst war, typischer weise Cyclopentanon, unlöslich. Das getrocknete aber unbelichtete Polyimid im Randbereich wird anschließend mit lösungsmittel abgewaschen. Erst dann erfolgt das Tempern bei 300°C, wobei die Schicht durchhärtet. Die Polyimidschicht im Randbereich ist zu entfernen, da auf ihr die gebräuchlichen Kleber schlecht haften, mit denen das Verkleben zweier Substratplatten entlang derer. Randbereich erfolgt.

Um das Freiätzen mit Flußsäure im Fall der Isolierschicht oder das Belichten und Abwaschen im Falle der Orientierungsschicht zu vermeiden, wird verschiedentlich auch ein Abdeckverfahren verwendet, gemäß dem der freizuhaltende Randbereich zunächst mit einem Klebestreifen abgedeckt wird und dann erst das Beschichten mit dem Funktionsschichtmaterial erfolgt. Nach dem Trocknen der beschichteten Flüssigkeit wird der Klebestreifen abgezogen. Dieses Verfahren führt jedoch häufig zu Verunreinigungen durch zurückgebliebenen Kleber des Klebebandes.

Der DE-B-2 638 091 sind die Merkmale des Oberbegriffs des Anspruchs 1 zu entnehmen.

Der Erfindung liegt die Aufgabe zugrunde, ein Verfahren der eingangs genannten Art anzugeben, das einfach ausführbar ist und zu keinen Verschmutzungen im Randbereich führt.

### DARSTELLUNG DER ERFINDUNG

Die Erfindung ist durch die Merkmale von Anspruch 1 gegeben. Vorteilhafte Weiterbildungen und Ausgestaltungen sind Gegenstand der Unteransprüche.

Das erfindungsgemäße Verfahren ist ein Abdeckverfahren, arbeitet jedoch nicht mit einem abziehbaren Klebestreifen, sondern mit einer sich bei Erwärmung verflüchtigenden Abdeckschicht. Beim Entfernen der Abdeckschicht besteht demgemäß nicht mehr die Gefahr, daß Verschmutzungen zurückbleiben. Noch bedeutender ist jedoch der Vorteil, daß diese sich verflüchtigende Abdeckschicht beim Aufbringen einer solchen Funktionsschichtsubstanz verwendet wird, die erst bei Erwärmung aushärtet. Dies bedeutet, daß für das Bearbeiten der Funktionsschichtsubstanz auf jeden Fall ein Temperprozeß erforderlich ist. Bei diesem Prozeß verflüchtigt sich zugleich die Abdeckschicht, so daß kein besonderer Arbeitsgang erforderlich ist, um den Randbereich von der Funktionsschicht zu befreien. Bei einem ohnehin in der Regel durchgeführten Reinigungsprozeß vor dem nächsten Verfahrensschritt werden Funktionsschichtsubstanzteilchen, die auf der Abdeckschicht lagen, abgeblasen oder abgewaschen.

Soll ein möglichst scharfer Rand erreicht werden, ist es von Vorteil, die Abdeckschicht durch Tauchen aufzubringen. Kommt es auf eine saubere Berandung dagegen nicht an, was bei der Isolierschicht und der Orientierungsschicht typischerweise der Fall ist, ist es von besonderem Vorteil, die Abdeckschicht durch Aufstreichen aufzubringen, da dieses Verfahren besonders sparsam im Materialverbrauch ist.

### KURZE BESCHREIBUNG DER ZEICHNUNGEN

Fig. 1: schematischer Teilquerschnitt durch eine Substratplatte mit Leiterbahnschicht und Abdeckschicht;
Fig. 2: Ansicht gem. Fig. 1, jedoch mit zusätzlich aufgebrachter Funktionsschicht; und
Fig. 3: Ansicht gem. Fig. 2, jedoch mit entfernter Abdeckschicht und fertiggestellter Funktionsschicht.

### WEGE ZUM AUSFÜHREN DER ERFINDUNG

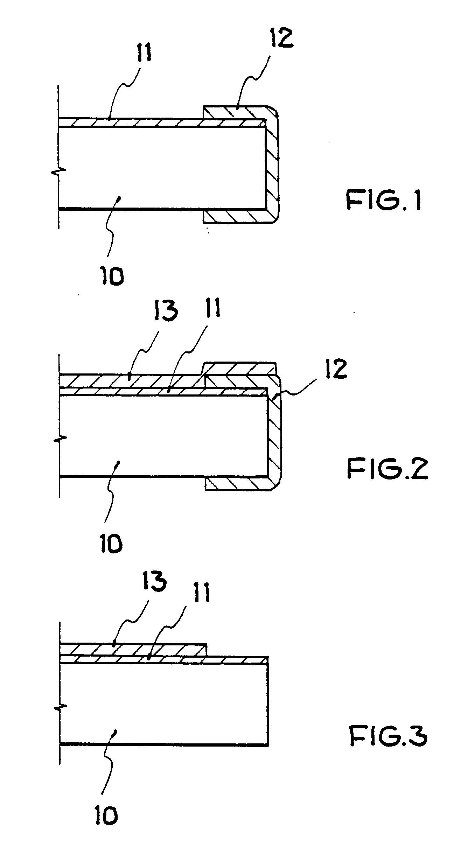

Veranschaulicht durch die Fig. 1 - 3 wird nun ein Verfahren zum Herstellen einer Orientierungsschicht erläutert.

Auf ein Substrat 10 mit strukturierter Leiterbahnschicht 11 wird entlang den Rändern durch Tauchen in eine Lösung eine Abdeckschicht 12 hergestellt. Die Lösung besteht aus 5 Gew.% Polymethylmethacrylat oder 5 % Poly-(α-methyl)-styrol in Butanon. Die Polymere zersetzen sich bei Erwärmung auf etwa 250 °C in die zugehörigen Monomere. Wird die Erwärmung in Vakuum oder Schutzgas vorgenommen, wird beispielsweise Polyethylen verwendet, gelöst in Trichloräthan.

Die Abdeckschicht trocknet alleine durch Verdampfen des Butanon bei Raumtemperatur so weit ab, daß der anhand von Fig. 2 veranschaulichte Verfahrensschritt ausgeführt werden kann. Es wird nämlich in üblicher Art und Weise eine Polyimidschicht aufgebracht, z. B. mit einem Spinccat-Verfahren unter Verwenden einer Lösung von z. B. 2 Gew.% Polyimid in Cyclopentanon. Der herkömmliche Zusatz einer Substanz, die den Polyimidfilm lichtempfindlich macht, ist nicht erforderlich, da der Randbereich nicht mehr mit einem Belichtungsverfahren geschaffen wird, sondern mit Hilfe der Abdeckschicht 12.

Die mit der Abdeckschicht 12 von der Polyimidschicht 13 versehene Substratplatte 10 wird in einen Temperofen gegeben und dort auf etwa 300 °C aufgeheizt. Dabei trocknet zunächst die Polyimidschicht 13, wobei ihr Vernetzungsgrad bereits steigt und dann härtet sie unter Erreichen ihres Endvernetzungsgrades aus. Das Material der Abdeckschicht verflüchtigt sich bei etwa 250 °C. Im Randbereich, in dem die Abdeckschicht 12 von der Polyimidschicht 13 überdeckt war, bleiben Polyimidkörner liegen. Diese werden anschließend abgeblasen oder abgewaschen.

Statt Lösungen für die Abdeckmaterialien können auch Schmelzen verwendet werden, z.B. geschmolzene übliche Heißkleber auf Acrylat- oder Acrylat-Styrol-Basis.

Es ist von Vorteil, eine solche Abdeckschichtsubstanz zu wählen, die sich erst dann verflüchtigt, wenn die Funktionsschichtsubstanz bereits ausgetrocknet ist. Dies, weil noch feuchte Polyimidschichten relativ gut an der Unterlage haften. Würde die Abdeckschichtsubstanz bereits verflüchtigt sein, bevor die Funktionsschichtsubstanz getrocknet ist, könnte letztere daher unerwünschterweise auch im Randbereich am Substrat anhaften.

Das beschriebene Ausführungsbeispiel bezieht sich auf das Aufbringen einer Orientierungsschicht aus Polyimid. Der Verfahrensablauf hängt jedoch nicht vom Material für die aufzubringende Funktionsschicht, hier die Orientierungsschicht 13, ab. Es kann z. B. auch eine Isolierschicht oder eine Schicht für Ansteuerelemente, z. B. Dünnfilmtransistoren, aufgebracht werden.

Die Berandung der aufzubringenden Schicht muß nicht notwendigerweise entlang dem Rand einer Substratplatte verlaufen, sondern Funktionsschichtränder können auch auf der Oberfläche der Substratplatte 10 verlaufen.

Ist eine scharfe Berandung gewünscht, und verläuft diese entlang dem Rand der Substratplatte, ist es von Vorteil, die Abdeckschicht 12 durch Tauchen aufzubringen, wie oben angegeben. Muß die Berandung weniger scharf sein, z. B. nur eine Toleranz von etwa 1 mm aufweisen, wird vorteilhafterweise ein Aufstreichverfahren verwendet, da dieses schnell durchführbar ist und der Materialverbrauch besonders gering ist. Das Aufstreichverfahren kann auf der gesamten Substratfläche ausgeführt werden. Entsprechendes gilt für ein Aufsprühverfahren durch eine Schablone hindurch. Mit dem Aufsprühverfahren lassen sich genauere Ränder einstellen als mit einem Aufstreichverfahren, jedoch ist häufige Schablonenreinigung als zusätzlicher Arbeitsschritt erforderlich. Wird ein Heißkleber für die Abdeckschicht verwendet, können auch Druckverfahren zum Herstellen scharfer Ränder durchgeführt werden.

## Patentansprüche

1. Verfahren zum Aufbringen einer bei Erwärmung aushärtenden Funktionsschichtsubstanz als berandete Schicht auf eine mit Leiterbahnen versehene Substratplatte einer Flüssigkristallzelle,
**gekennzeichnet durch**
die nachfolgend, in ihrer zeitlichen Abfolge angegebenen Schritte,
- daß erstens auf den vorgesehenen Randbereich eine Schicht einer sich bei Erwärmung verflüchtigenden Abdeckschichtsubstanz aufgebracht wird,
- daß zweitens die gesamte Substratplatte mit der aufzubringenden Funktionsschichtsubstanz bedeckt wird,
- daß drittens die Substratplatte mit den Schichten so hoch erhitzt wird, daß die Abdeckschichtsubstanz sich verflüchtigt und die Funktionsschichtsubstanz aushärtet, und
- daß viertens der Randbereich nach dem Aushärten der Funktionsschichtsubstanz abgeblasen oder abgewaschen wird.

2. Verfahren nach Anspruch 1,
**dadurch gekennzeichnet,**
daß als Abdeckschichtsubstanz eine solche gewählt wird, die sich während des Trocknungsvorgangs der Funktionsschicht noch nicht verflüchtigt.

3. Verfahren nach einem der Ansprüche 1 - 2,
**dadurch gekennzeichnet,**
daß die Abdeckschichtsubstanz eine Lösung von Polymethylmethacrylat oder Poly-(α-melthyl)-styrol ist.

4. Verfahren nach einem der Ansprüche 1 - 3,
**dadurch gekennzeichnet,**
daß die Abdeckschicht durch Tauchen aufgebracht wird.

5. Verfahren nach eine der Ansprüche 1 - 3,
**dadurch gekennzeichnet,**
daß die Abdeckschicht durch Streichen aufgebracht wird.

## Claims

1. Process for applying a functional layer substance that
cures upon heating, as an edging layer, onto a substrate panel of a liquid crystal cell provided with conductor paths,
characterized by
the following steps, indicated in their temporal succession:
- that firstly a layer of a cover layer substance that volatilizes upon heating is applied onto the intended edge region;
- that secondly the entire substrate panel is coated with the functional layer substance that is to be applied;
- that thirdly the substrate panel with the layers is heated to a temperature such that the cover layer substance volatilizes and the functional layer substance cures; and
- that fourthly, after the functional layer substance has cured, the edge region is blown or washed away.

2. Process according to Claim 1,
characterized in that
the cover layer substance selected is one that remains
unvolatilized during the drying process for the functional layer.

3. Process according to either of Claims 1 or 2,
characterized in that
the cover layer substance is a solution of Polymethylmethacrylate or poly-([alpha]-methyl)-styrene.

4. Process according to any one of Claims 1 to 3,
characterized in that
the cover layer is applied by immersion.

5. Process according to any one of Claims 1 to 3,
characterized in that
the cover layer is applied by painting.

## Revendications

1. Procédé pour l'application d'une substance de recouvrement fonctionnelle durcissant sous échauffement comme couche lisière sur une plaque substrat d'une cellule à cristal liquide munie de pistes conductives, **caractérisé** par les opérations suivantes dans l'ordre chronologique, en ce que
- premièrement une couche de substance de recouvrement se volatilisant sous échauffement sur la zone de bordure prévue,
- deuxièmement toute la plaque substrat est recouverte avec la substance de recouvrement fonctionnelle à appliquer,
- troisièmement la plaque substrat avec les couches est échauffée à tel point que la substance de recouvrement se volatilise et durcit la substance de recouvrement fonctionnelle, et
- quatrièmement la zone de bordure est enlevée par soufflage ou lavage après le durcissement de la substance de recouvrement fonctionnelle.

2. Procédé selon la revendication 1,
**caractérisé** en ce que comme substance de revêtement on en choisit une qui ne se volatilise pas encore pendant le processus de séchage de la couche fonctionnelle.

3. Procédé selon l'une des revendications 1 - 2,
**caractérisé** en ce que la substance de recouvrement est une solution de polyméthylméthacrylate ou de poly(α-méthyl)-styrol.

4. Procédé selon l'une des revendications 1 - 3,
**caractérisé** en ce que la couche de recouvrement est appliquée par immersion.

5. Procédé selon l'une des revendications 1 - 3,
**caractérisé** en ce que la couche de recouvrement est appliquée par peinture.
